# FASCICULE DE BREVET EUROPEEN

(11) **EP 1 245 099 B1**
(45) Date de publication et mention de la délivrance du brevet: **01.12.2004**
(21) Numéro de dépôt: 01903848.8
(22) Date de dépôt: 02.01.2001
(51) Int. Cl.: H04L 12/64, H04J 3/06

(54) **DISPOSITIF DE RECEPTION DE PAQUETS**
VORRICHTUNG ZUM EMPFANG DER DATENPACKETEN
PACKET RECEPTION DEVICE

(30) Priorité: 03.01.2000 FR 0000016
(43) Date de publication de la demande: 02.10.2002
(73) Titulaire: Eads Telecom, 78180 Montigny Le Bretonneux (FR)
(72) Inventeur: LEMOINE, Maurice, F-29730 Treffiagat (FR)
(74) Mandataire: Loisel, Bertrand
(86) Numéro de dépôt international: PCT/FR2001/000003
(87) Numéro de publication internationale: WO 2001/050692

(56) Documents cités:
- EP-A- 0 743 773
- US-A- 5 623 483
- FOO S ET AL: "ENHANCING THE QUALITY OF LOW BIT-RATE REAL-TIME INTERNET COMMUNICATIO SERVICES" INTERNET RESEARCH: ELECTRONIC NETWORKING APPLICATIONS AND POLICY,XX,XX, vol. 9, no. 3, 1999, pages 212-224, XP000901290 ISSN: 1066-2243

## Description

La présente invention concerne les transmissions en mode paquets de signaux en temps réel.

Les signaux en question peuvent notamment être des signaux de phonie. La transmission numérique d'un signal de phonie requiert un échantillonnage du signal au niveau d'un dispositif de prise de son, ou plus généralement au niveau d'un émetteur. Dans une application en temps réel, par exemple pour la téléphonie, l'horloge du récepteur est synchronisée sur celle de l'émetteur, afin d'éviter les problèmes de dérive temporelle. Ces considérations s'appliquent également à d'autres types de signaux en temps réel, par exemple des signaux vidéo.

Il a été développé des protocoles permettant de transmettre des signaux en temps réel dans des réseaux de datagrammes. Dans le cas des réseaux fonctionnant selon le protocole IP (« Internet Protocol »), il s'agit notamment du protocole RTP (« Real Time Protocol »), qui fonctionne avec le protocole UDP (« User Datagram Protocol ») en couche transport.

Chaque paquet RTP contient un en-tête comportant un numéro de séquence du paquet et une information de datation du paquet en relation avec l'horloge d'échantillonnage du signal. Cette information donne une date d'une portion de signal codée dans la partie utile du paquet, exprimée en nombre de cycles de l'horloge d'échantillonnage du signal, ou d'une autre horloge synchrone avec celle-ci. Le numéro de séquence permet de reconstituer la séquence des paquets émis s'ils n'ont pas été reçus dans l'ordre et de détecter des paquets manquants. Si la réception d'un ou plusieurs paquets consécutifs est manquée, l'information de datation permet de déterminer le nombre d'échantillons de signal qui manquent, et donc le nombre d'échantillons de substitution à insérer dans le flux de signal en temps réel reconstitué. L'information de datation peut être utilisée pour synchroniser le récepteur.

La synchronisation requiert habituellement une régulation de la fréquence de l'horloge locale du récepteur, ce qui requiert des circuits dont il serait souhaitable de pouvoir se dispenser, particulièrement lorsque le dispositif recevant les paquets les retransmet de manière synchrone vers d'autres unités.

Le brevet US-A-5 623 483 décrit un récepteur de paquets portant un signal en temps réel, qui peut éliminer ou rajouter périodiquement un paquet afin de compenser des dérives d'horloge par rapport à l'émetteur. Une telle élimination ou insertion d'un paquet provoque une dégradation perceptible du signal en temps réel.

La demande de brevet EP-A-0 743 773 décrit un décodeur de parole recevant des trames de signal codé par une méthode prédictive (CELP, « code-excited linear prédiction ») afin de réduire le débit de transmission entre le codeur et le décodeur. En fonction du nombre de trames accumulées dans un tampon de réception, le décodeur peut modifier le traitement de la trame courante afin de compenser des dérives d'horloge par rapport au codeur. Cette modification peut consister à supprimer ou ajouter des sous-trames CELP voire des échantillons du signal décodé. Manipuler ainsi le signal en fonction du nombre de trames arrivées dans le tampon d'entrée rend le décodeur très sensible au rythme d'arrivée des trames. Si celui-ci est irrégulier, ce qui est fréquemment le cas avec des réseaux de datagrammes de type IP ou analogue, le décodeur génère de nombreuses corrections non pertinentes car elles ne sont pas dues à un écart de fréquence d'horloge.

La présente invention a pour but de répondre de manière efficace au besoin ci-dessus.

L'invention propose ainsi un dispositif de réception de paquets contenant chacun des informations de codage d'un signal en temps réel et un en-tête comportant une information de datation du paquet en relation avec une horloge d'échantillonnage du signal, comprenant :
- des moyens de mémorisation d'échantillons ;
- des moyens de traitement de paquets pour enregistrer, dans les moyens de mémorisation, une file d'attente d'échantillons de signal obtenus à partir des paquets reçus de manière asynchrone, les échantillons de la file d'attente étant ordonnancés conformément aux informations de datation contenues dans les paquets ;
- des moyens de transfert d'échantillons pour former, au rythme d'une horloge locale, un flux d'échantillons synchrone représentant le signal en temps réel, successivement transférés par blocs depuis la file d'attente ;
- des moyens de régulation pour commander les moyens de transfert de façon à limiter les variations du nombre d'échantillons de la file d'attente, en insérant ou en supprimant des échantillons dans le flux synchrone par rapport à ceux lus dans la file d'attente, en fonction de l'évolution du nombre d'échantillons enregistrés par les moyens de traitement de paquets dans les moyens de mémorisation au cours de périodes définies relativement à ladite horloge locale, le nombre d'échantillons insérés ou supprimés dans la file d'attente au cours du transfert de chaque bloc étant sensiblement plus faible que le nombre d'échantillons obtenus à partir d'un paquet.

Avec les fréquences d'échantillonnage usuelles, la suppression ou l'ajout d'un échantillon de signal audio est quasiment inaudible. Le dispositif selon l'invention en tire parti pour réguler le flux d'échantillons restitué de manière synchrone avec l'horloge locale, sans avoir à asservir la fréquence de cette horloge. Cette régulation est effectuée en observant le remplissage des moyens de mémorisation d'échantillons, afin de supprimer quelques échantillons lorsqu'un excès d'échantillons est enregistré en réponse à la réception des paquets, et pour en ajouter lorsqu'au contraire les moyens de mémorisation d'échantillons ont tendance à se vider. L'observation du nombre d'échantillons enregistrés est effectuée après le traitement des paquets reçus, ce qui évite de modifier ce traitement. Cela permet en outre d'opérer la régulation de manière plus fine, en fonction d'un nombre d'échantillons et non en fonction du nombre de paquets reçus, lequel fluctue en raison de la réception asynchrone des paquets.

Les échantillons sont de préférence ajoutés ou supprimés de manière isolée. Ils pourraient toutefois être ajoutés ou supprimés petit groupe par petit groupe, à condition que la taille de ces groupes soit très petite par rapport au nombre d'échantillons résultant du traitement d'un paquet, afin que la manipulation reste peu perceptible.

D'autres particularités et avantages de la présente invention apparaîtront dans la description ci-après d'exemples de réalisation non limitatifs, en référence aux dessins annexés, dans lesquels :
- la figure 1 est un schéma synoptique d'un système de transmission comportant un dispositif de réception selon l'invention ;
- les figures 2 et 3 sont des organigrammes de procédures appliquées par le dispositif de réception de la figure 1, respectivement lors de la réception d'un paquet et lors du transfert d'un bloc d'échantillons du flux de sortie ;
- la figure 4 est un schéma synoptique d'un autre système de transmission comportant un dispositif de réception selon l'invention.

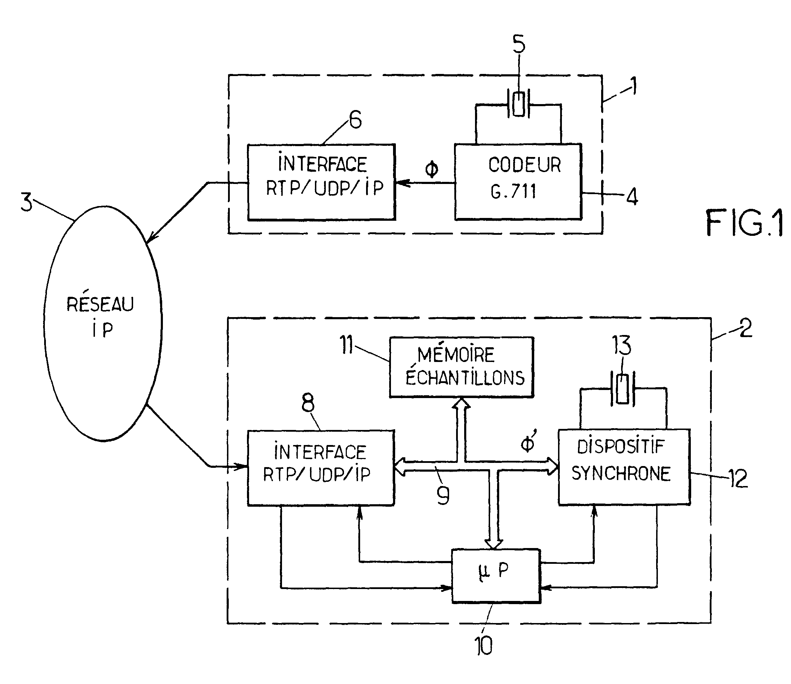

La figure 1 montre un dispositif émetteur 1 et un dispositif récepteur 2 communiquant par l'intermédiaire d'un réseau 3 de type IP.

Dans l'exemple considéré, l'émetteur 1 comporte un codeur audio 4, qui traite un signal de parole échantillonné à une fréquence Fₑ, par exemple de 8 kHz. La fréquence d'échantillonnage employée par le codeur 4 est générée par division de fréquence à partir d'un oscillateur à quartz 5 dont la fréquence nominale est par exemple de 2,048 MHz.

Dans l'exemple de la figure 1, le codeur de parole 4 est un codeur G.711 normalisé par l'Union Internationale des Télécommunications (UIT). Ce codeur délivre des échantillons en temps réel codés en MIC (modulation par impulsions codées, ou PCM, loi A ou loi µ), chaque échantillon étant codé sur un octet (débit de 64 kbit/s).

Le flux de sortie Φ du codeur 4 est délivré à une interface 6 de l'émetteur 1, qui insère les échantillons codés dans des paquets RTP émis dans des datagrammes IP sur le réseau 3 à destination du récepteur 2.

De façon classique, chaque datagramme émis comporte un en-tête IP, suivi par un en-tête UDP et un en-tête RTP. L'en-tête IP indique notamment l'adresse IP de l'émetteur 1 et celle du récepteur 2. L'en-tête UDP indique un numéro de port logique UDP de l'émetteur 1, affecté au codeur 4, et un numéro de port UDP correspondant du récepteur 2. L'en-tête RT"P contient un numéro de séquence NP du paquet, codé sur 16 bits, et une information TS de datation du paquet. L'information de datation TS, codée sur 32 bits correspond au rang du premier échantillon du paquet dans le flux de sortie Φ du codeur 4, modulo 2³². Après les en-têtes, la partie utile du paquet RTP comporte N échantillons de signal MIC codé, correspondant à N×125 µs de parole.

Dans la réalisation considérée ci-après à titre d'illustration, le nombre N est constant, par exemple N = 40, et l'émetteur 1 ne met pas en oeuvre un mécanisme de suppression de silence (consistant à ne pas transmettre, ou à transmettre à plus bas débit, lorsqu'il n'est pas détecté d'activité vocale dans le signal de parole traité par le codeur 4). Dans ce cas particulier, les données TS et NP sont redondantes puisqu'elles sont dans un rapport fixe N. En conséquence, il est équivalent pour le récepteur 2 de se fonder sur l'information de datation TS ou sur le numéro de séquence NP.

Le récepteur 2 comprend également une interface 8 avec le réseau IP 3 pour traiter les datagrammes IP reçus de l'émetteur 1 et en extraire les échantillons de signal.

Dans l'architecture représentée sur la figure 1, l'interface 8 est reliée au bus 9 d'un microprocesseur 10, auquel sont également reliés une mémoire RAM 11 et un dispositif synchrone 12 recevant un flux d'échantillons Φ'.

Le dispositif synchrone 12 peut notamment être un décodeur G.711 associé à un dispositif de restitution du son pour restituer la parole en temps réel à un utilisateur. Il peut également être un dispositif d'interface avec une liaison synchrone sur laquelle les échantillons G.711 sont réémis.

Le dispositif synchrone 12 est piloté par un oscillateur à quartz 13, dont la fréquence nominale d'oscillation peut être identique à celle de l'oscillateur 5 de l'émetteur, afin de prendre en compte les échantillons de signal à la fréquence Fₑ. Compte tenu des tolérances des quartz habituellement utilisés (environ 30 ppm sur la fréquence d'oscillation) et de la gamme de température à laquelle ils peuvent être soumis, chaque fréquence d'oscillation peut présenter un décalage allant jusqu'à 120 Hz par rapport à la fréquence nominale de 2,048 MHz. La dérive maximale entre l'émetteur et le récepteur est alors d'environ 240 Hz / 2,048 MHz, ce qui représente un décalage d'un échantillon de signal tous les 8500 échantillons environ. Si on laisse s'accumuler ce décalage, des perturbations se produiront dans le signal restitué par le récepteur. Des mesures compensatrices sont donc prévues.

La mémoire RAM sert à contenir une file d'attente de paquets reçus de manière asynchrone sur l'interface 8 avant d'être transférés de manière synchrone vers le dispositif 12. La mémoire 11 comporte L adresses numérotées de 0 à L-1, pouvant contenir chacun un octet. A titre d'exemple, L = 8000, ce qui représente une capacité d'une seconde de parole.

L'interface 8 et le dispositif 12 sont des unités périphériques vis-à-vis du processeur 10 qui les commande pour qu'elles effectuent des cycles d'accès direct en mémoire (DMA, « Direct Memory Access ») pour respectivement écrire et lire des échantillons dans la mémoire 11.

Le processeur 10 commande l'interface 8 pour qu'elle effectue des cycles d'écriture DMA dans la mémoire 11, chaque cycle comprenant par exemple l'écriture de L octets à partir de l'emplacement 0 jusqu'à l'emplacement L-1. Ces cycles DMA se succèdent, de telle sorte que les écritures dans la mémoire 11 sont effectuées de façon circulaire.

L'interface 8 applique une procédure pour constituer la file d'attente, c'est-à-dire mettre les paquets dans l'ordre des numéros de séquence, et écrire leurs échantillons dans la mémoire de paquets 11. Si des paquets sont reçus trop tardivement, l'interface 8 les supprime. En outre, les paquets qui ne sont pas reçus en temps utile sont remplacés par des paquets de substitution (par exemple répétition du paquet précédent ou paquet de silence).

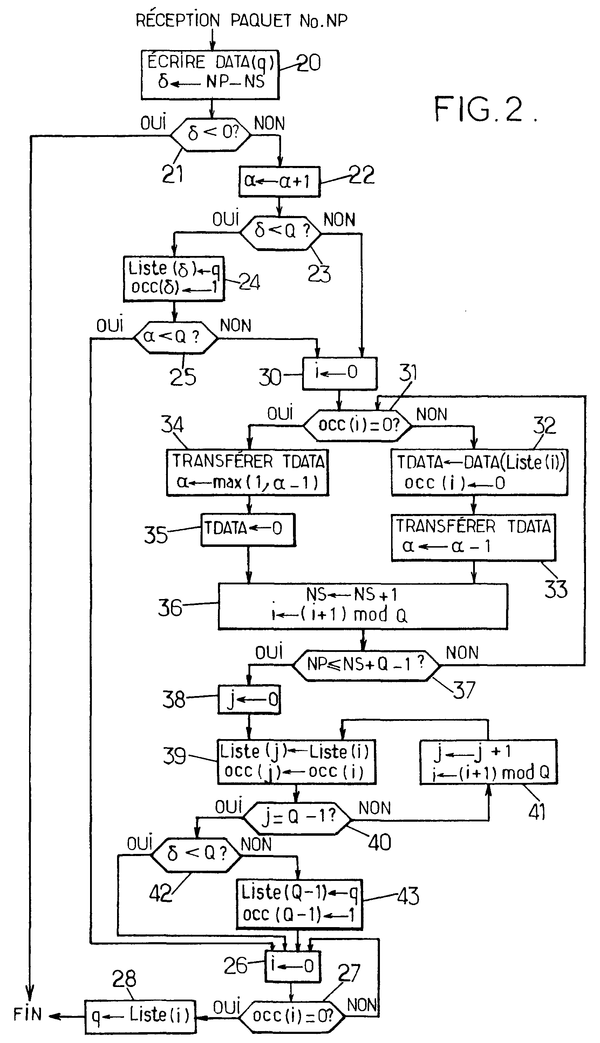

La figure 2 montre un exemple d'une telle procédure exécutable par l'interface 8 à réception d'un paquet RTP portant le numéro de séquence NP. Dans cet exemple, l'interface 8 comporte une mémoire tampon ayant Q emplacements capables de mémoriser chacun les octets de données d'un paquet, soit une capacité de NxQ octets. Dans les notations de la figure 2 :
- NS désigne le numéro de séquence du prochain paquet à écrire dans la mémoire 11 (NS = 0 à l'initialisation) ;
- occ(i) est un bit indiquant, pour 0 ≤ i < Q, si le paquet de numéro de séquence NS+i est arrivé (occ(i) = 1) ou non (à l'initialisation, occ(i) = 0 pour 0 ≤ i < Q) ;
- Liste(i) contient, pour 0 ≤ i < Q, un entier compris entre 0 et Q-1 désignant l'emplacement de la mémoire tampon où sont enregistrés les échantillons du paquet NS+i si occ(i) = 1 (à l'initialisation, Liste(i) = i pour 0 ≤ i < Q) ;
- α est un entier égal au nombre de paquets reçus en attente de transfert vers la mémoire 11 (à l'initialisation, α = 0) ;
- TDATA désigne les N octets du dernier paquet transféré dans la mémoire 11, stockés dans un registre pour former les éventuels paquets de substitution (à l'initialisation, on peut prendre des octets nuls dans TDATA, ce qui correspond à un paquet de silence) ;
- q désigne un emplacement disponible dans la mémoire tampon pour écrire les N octets du prochain paquet reçu (à l'initialisation, q = 0).

A réception du paquet NP, les N octets de données du paquet sont écrites à l'emplacement q de la mémoire tampon, et la variable δ est prise égale à l'écart NP-NS entre le numéro de séquence du paquet reçu et le numéro de séquence du prochain paquet à transférer (étape 20 de la figure 2).

Si δ < 0 (test 21), le paquet est reçu trop tard pour être transféré dans la mémoire 11, de sorte qu'il est supprimé. La procédure de la figure 2 se termine alors en revenant en attente de réception du prochain paquet, qui sera écrit par-dessus le paquet supprimé à l'emplacement q.

Le paquet peut être pris en compte quand δ ≥ 0 au test 21. L'entier α est alors incrémenté d'une unité à l'étape 22.

Si δ < Q (test 23), les variables occ(δ) et Liste(δ) reçoivent respectivement les valeurs 1 et q à l'étape 24 pour identifier l'emplacement du paquet NS+δ. Après l'étape 24, la variable α est comparée à Q à l'étape 25. Si α < Q, la mémoire tampon n'est pas saturée, de sorte qu'aucun paquet n'est transféré vers la mémoire 11. Dans ce cas, la procédure passe aux étapes 26 à 28 pour changer la valeur du pointeur q. Ces étapes 26 à 28, qui terminent la procédure de la procédure 2, consistent simplement à choisir pour le pointeur q une valeur Liste(i) telle que 0 ≤ i < Q et occ(i) = 0.

Si δ ≥ Q au test 23, ou si α ≥ Q au test 25, l'interface 8 transfère un ou plusieurs paquets vers la mémoire 11. Dans l'exemple de la figure 2, ceci est effectué dans une boucle 30-37 initialisée par i = 0 à l'étape 30.

Si le paquet de rang NP-δ+i a bien été reçu (occ(i) = 1 au test 31), les N octets de ce paquet sont lus à l'emplacement Liste(i), chargés dans le registre TDATA à l'étape 32, puis transférés en mode DMA vers la mémoire 11 à l'étape 33. En outre, le bit occ(i) est ramené à 0, et l'entier α est décrémenté d'une unité.

Si le paquet de rang NP-δ+i n'a pas été reçu (occ(i)=0 au test 31), un paquet de substitution correspondant aux N octets du registre TDATA est transféré vers la mémoire 11 à l'étape 34, et l'entier α est décrémenté d'une unité, sans descendre sous la valeur plancher α = 1. Les N octets TDATA sont ensuite mis à zéro à l'étape 35. Avec cette méthode, le paquet de substitution de rang NS correspond à la répétition du paquet NS-1 si celui-ci a été correctement reçu, et à un paquet de silence sinon.

Après l'étape 33 ou 35, le numéro de séquence NS est incrémenté d'une unité à l'étape 36, et l'index i est également incrémenté, modulo Q. A l'issue de l'étape 36, si NP > NS+Q-1 (test 37), la procédure revient à l'étape 31 pour transférer un autre paquet vers la mémoire 11. Sinon, un décalage est effectué dans les tableaux Liste et occ pour les mettre à jour, dans une boucle 38-41. A l'initialisation 38 de cette boucle, j = 0 et l'index i conserve la valeur qu'il avait à l'issue de la dernière itération de la boucle 30-37. A l'étape 39, les valeurs Liste(i) et occ(i) sont transférées dans Liste(j) et occ(j). Si j < Q-1 (test 40), l'étape suivante 41 consiste à incrémenter j unité, ainsi que i modulo Q. Quand j = Q-1, au test 40, le décalage des tableaux Liste et occ est terminé, et δ est comparé à Q à l'étape 42. Si δ < Q, le traitement consécutif à la réception du paquet NP se termine par la mise à jour du pointeur q aux étapes 26 à 28 précitées. Si δ ≥ Q, cette mise à jour du pointeur q est précédée à l'étape 43 par l'écriture des valeurs respectives 1 et q dans les variables occ(Q-1) et Liste(Q-1 ).

La lecture des échantillons de signal dans la mémoire 11, qui forme le flux de signal Φ' est également effectuée lors de cycles de transfert DMA, effectués par le dispositif synchrone 12 sous le contrôle du processeur 10. Au cours de chaque cycle, le dispositif 12 transfère un bloc de M octets lus dans la mémoire 11 à sa cadence d'échantillons déduite de la fréquence d'oscillation du quartz 13. Le compteur d'adresse de lecture est incrémenté d'une unité (modulo L) à chaque échantillon lu, de sorte que la mémoire 11 est également lue avec un adressage circulaire. A la fin du transfert DMA de chaque bloc, le dispositif 12 adresse au processeur 10 un signal d'interruption. En réponse à ce signal, le processeur 10 initialise le prochain cycle de transfert DMA, et fournit les commandes correspondantes au dispositif 12.

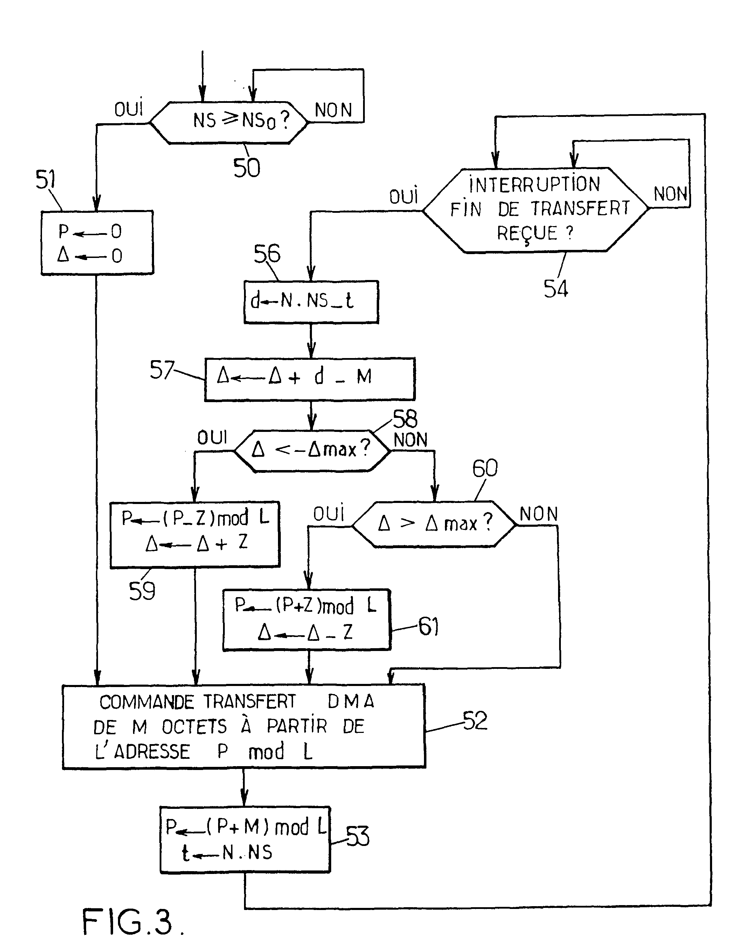

La procédure appliquée par le processeur 10 pour commander ces cycles de transfert DMA peut être conforme à celle illustrée par la figure 3. Dans les notations de la figure 3 :
- NS₀ désigne le nombre de paquets qui, une fois qu'ils ont été écrits dans la mémoire 11, provoquent le début du transfert d'échantillons vers le dispositif synchrone 12 ;
- P est un pointeur désignant l'adresse de début du transfert DMA effectué par le dispositif synchrone 12 sous le contrôle du processeur 10 ;
- M désigne le nombre d'octets d'un bloc d'échantillons transféré au cours d'un cycle DMA par le dispositif 12 ;
- t désigne le nombre d'octets qui ont été enregistrés dans la mémoire 11 jusqu'au moment où le processeur 10 initialise un cycle de transfert DMA vers le dispositif synchrone 12 ;
- Δ est un entier mesurant un écart à rattraper entre les nombres d'échantillons écrits et lus dans la mémoire 11 : quand Δ > 0, il y a un excès d'échantillons dans la mémoire 11 par rapport à ceux transférés dans le flux Φ', et quand Δ < 0, il y a plutôt un déficit d'échantillons enregistrés dans la mémoire 11.

La procédure représentée sur la figure 3 est lancée quand NS₀ paquets ont été écrits dans la mémoire 11 (test 50), ce que le processeur 10 peut vérifier en consultant la valeur courante de la variable NS de la procédure selon la figure 2, ou en référence à l'adresse d'écriture courante dans la mémoire 11 par l'interface 8. Les variables P et Δ sont alors initialisées à 0 à l'étape 51.

A l'étape 52, le processeur 10 commande un cycle de lecture en mode DMA par le dispositif synchrone 12, pour que soit transféré dans le flux Φ' un bloc de M octets à partir de l'adresse P modulo L. A l'étape suivante 53, le pointeur d'adresse P est augmenté de M unités, modulo L, et la variable t reçoit la valeur N.NS correspondant à l'adresse dans la mémoire 11 du prochain octet qui sera écrit par l'interface 8. Cette étape 53 termine le traitement effectué par le processeur 10 relativement au bloc courant du flux Φ'.

Le processeur 10 attend ensuite la réception du signal d'interruption par lequel le dispositif synchrone 12 lui indique qu'il a terminé le transfert du bloc courant (étape 54).

A réception de ce signal d'interruption, le processeur 10 détermine à l'étape 56 le nombre d'octets que l'interface 8 a écrits dans la mémoire 11 pendant la lecture du dernier bloc de M échantillons (y compris les paquets de substitution). Ce nombre d est égal à N.NS-t, avec la nouvelle valeur courante du numéro de séquence NS (ou avec la nouvelle adresse d'accès DMA par l'interface 8, égale à N.NS). A l'étape 57, l'écart Δ est mis à jour en lui ajoutant la quantité d-M représentant l'accroissement (ou la réduction si d-M<0) de la file d'attente pendant le transfert du bloc précédent.

Si la nouvelle valeur de Δ est inférieure à un seuil négatif ou nul -Δmax (test 58), le pointeur de début de transfert DMA depuis la mémoire 11 est reculé de Z octets, c'est-à-dire que le nombre P est diminué de Z unités modulo L, et l'écart Δ est augmenté de Z unités à l'étape 59. Si la nouvelle valeur de Δ est supérieure au seuil +Δmax (test 60), le pointeur de début de transfert DMA depuis la mémoire 11 est avancé de Z unités, c'est-à-dire que le nombre P est augmenté de Z unités modulo L, et l'écart Δ est diminué de Z unités à l'étape 61. Quand -Δmax ≤ Δ ≤ Δmax, ou après l'étape 59 ou 61, le processeur 10 exécute l'étape 52 précitée pour commander le transfert DMA d'un bloc de M octets à partir de l'adresse P modulo L. La valeur du seuil Δmax peut être nulle.

Si l'horloge d'émission et l'horloge de réception sont synchrones, et si les paquets RTP sont reçus avec une gigue temporelle inférieure à la taille de la zone tampon de l'interface 8, l'écart Δ reste toujours nul, et la formation du flux synchrone Φ' résulte des transferts DMA successifs de blocs de M octets à partir d'adresses régulièrement espacées.

S'il existe une dérive entre les horloges d'émission et de réception, il y aura des cycles de transfert DMA à l'issue desquels Δ < -Δmax ou Δ > Δmax.

Quand Δ < -Δmax (pas assez de paquets reçus par rapport à la cadence du flux Φ'), les Z derniers échantillons sont répétés au début du bloc suivant, ce qui sera difficilement audible si Z est un petit nombre.

Quand Δ > +Δmax, la mémoire 11 tend à se remplir plus vite qu'elle se vide, et le décalage du pointeur P à l'étape 61 provoque la suppression de Z échantillons dans le flux Φ' pour compenser cette dérive.

Dans la réalisation préférée, on prend Z = 1.

On peut prendre M = L, le transfert DMA par le dispositif 12 consistant alors à lire l'intégralité de la mémoire 11. Il est à noter que le nombre M n'est pas nécessairement constant. On pourrait par exemple prendre M = L+Z quand Δ < -Δmax et M = L-Z quand Δ > Δmax. Dans ce dernier cas, les Z échantillons dupliqués ou supprimés se trouvent au début du prochain bloc transféré si le pointeur P est géré comme indiqué sur la figure 3, ou à la fin de ce bloc si on prend systématiquement P = 0.

La réalisation précédente est fondée sur des paquets de taille constante (N octets), sans mécanisme de suppression de silence. Dans ce cas, l'information de datation TS contenue dans chaque paquet RTP est redondante avec le numéro de séquence NP (car TS = N.NP), ce qui explique que seul NP ait été pris en compte dans l'exemple décrit ci-dessus. Si la taille des paquets est variable et/ou si un mécanisme de suppression de silence est employé par l'émetteur, les adresses d'écriture dans la mémoire 11 par l'interface 8, et donc les différences d mesurées pour réguler le flux Φ', sont simplement déterminées sur la base des informations TS obtenues dans les paquets reçus.

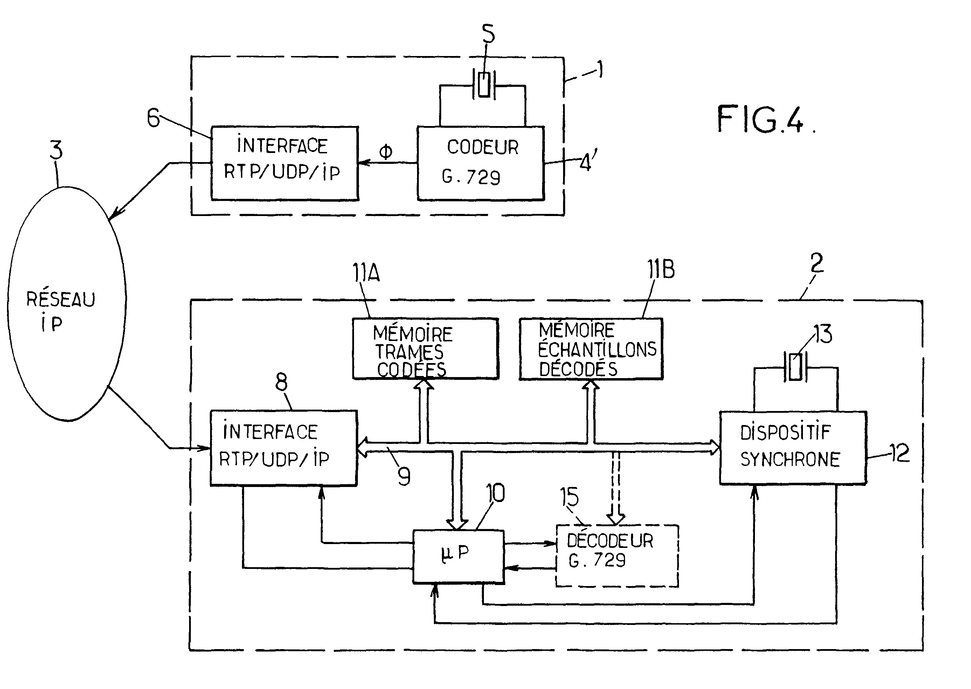

Dans la variante de réalisation représentée sur la figure 4, le signal numérique contenu dans les paquets RTP ne consiste pas directement en des échantillons de signal en temps réel, mais représente des trames de signal codé, générées par un vocodeur. Ces trames peuvent être produites par un vocodeur normalisé par l'UIT, G.729 dans l'exemple représenté (ou encore G.723 etc.). Le codeur 4' de l'émetteur 1 dispose d'échantillons de signal en temps réel, numérisé de manière synchrone avec une horloge échantillon obtenue par division de la fréquence d'oscillation du quartz 5, et les transforme en trames codées synchrones avec cette horloge. La numérisation du signal peut avoir été effectuée au niveau de l'émetteur avec une horloge issue de l'oscillateur 5 (cas où l'émetteur 1 est un terminal de téléphonie sur IP, par exemple), ou elle peut avoir été effectuée par un convertisseur distant, les horloges échantillon du convertisseur et du codeur 4' étant synchronisées (cas où l'émetteur 1 forme une interface entre un réseau IP et une liaison numérique synchrone, par exemple).

Au niveau du dispositif récepteur 2, l'interface IP 8 transfère la partie utile des paquets RTP de la même manière que précédemment dans une mémoire 11A contenant des trames codées. En fonction du remplissage de cette mémoire 11 A, le processeur 10 commande le décodage des trames mémorisées, pour reconstituer des échantillons du signal en temps réel transférés dans une autre mémoire 11B. Ce décodage est effectué de manière asynchrone, par le processeur 10 lui-même ou par un décodeur G.729 périphérique 15 relié au bus 9. Le dispositif synchrone 12 peut alors lire les échantillons de signal dans la mémoire 11 B de la même manière que précédemment. Plutôt que d'être simplement recopiées, les trames de substitution peuvent être déterminées, de façon connue en soi, par une interpolation de paramètres du vocodeur effectuée par le décodeur.

Le processus de régulation précédemment décrit est purement logiciel, ce qui évite d'avoir un circuit spécial pour asservir la fréquence de l'oscillateur 13 du dispositif synchrone 12. La régulation du flux Φ', qui évite les dérives temporelles par rapport au flux Φ formé au niveau de l'émetteur 1, résulte d'une mesure de la quantité de signal reçu (y compris les paquets de substitution) au cours de périodes définies par rapport à l'horloge locale générée par l'oscillateur 13. Chacune de ces périodes correspond au transfert DMA d'un bloc vers le dispositif 12.

En variante, chacune de ces périodes pourrait correspondre au transfert DMA d'un nombre donné K de blocs, ce qui permet de moyenner les fluctuations du nombre d d'échantillons enregistrés par l'interface 8 dans la mémoire 11 au cours des périodes définies relativement à l'horloge locale, dues au caractère irrégulier de la réception des datagrammes IP (dans l'exemple précédent, K = 1).

## Revendications

1. Dispositif de réception de paquets contenant chacun des informations de codage d'un signal en temps réel et un en-tête comportant une information de datation du paquet en relation avec une horloge d'échantillonnage du signal, comprenant :
- des moyens de mémorisation d'échantillons (11) ;
- des moyens de traitement de paquets (8) pour enregistrer, dans les moyens de mémorisation, une file d'attente d'échantillons de signal obtenus à partir des paquets reçus de manière asynchrone, les échantillons de la file d'attente étant ordonnancés conformément aux informations de datation contenues dans les paquets ;
- des moyens de transfert d'échantillons (12) pour former, au rythme d'une horloge locale, un flux d'échantillons synchrone (Φ') représentant le signal en temps réel, successivement transférés par blocs depuis la file d'attente,
et **caractérisé par** :
- des moyens de régulation (10) pour commander les moyens de transfert de façon à limiter les variations du nombre d'échantillons de la file d'attente, en insérant ou en supprimant des échantillons dans le flux synchrone par rapport à ceux lus dans la file d'attente, en fonction de l'évolution du nombre d'échantillons enregistrés par les moyens de traitement de paquets dans les moyens de mémorisation au cours de périodes définies relativement à ladite horloge locale, le nombre d'échantillons insérés ou supprimés dans la file d'attente au cours du transfert de chaque bloc étant sensiblement plus faible que le nombre d'échantillons obtenus à partir d'un paquet.

2. Dispositif selon la revendication 1, dans lequel les moyens de régulation comprennent un processeur (10), et dans lequel les moyens de traitement de paquets (8) et les moyens de transfert (12) sont agencés pour accéder aux moyens de mémorisation (11) en mode d'accès direct en mémoire sous le contrôle dudit processeur.

3. Dispositif selon la revendication 2, dans lequel lesdites périodes définies relativement à l'horloge locale correspondent à la lecture, par les moyens de transfert (12), d'un nombre déterminé de blocs d'échantillons dans les moyens de mémorisation (11), en mode d'accès direct en mémoire sous le contrôle du processeur (10).

4. Dispositif selon la revendication 2 ou 3, dans lequel l'insertion ou la suppression d'échantillons dans la file d'attente par le processeur (10) comporte un décalage d'adresse de début de lecture en mode d'accès direct en mémoire par les moyens de transfert (12).

5. Dispositif selon la revendication 2 ou 3, dans lequel l'insertion ou la suppression d'échantillons dans la file d'attente par le processeur (10) comporte un réglage du nombre d'échantillons lus en mode d'accès direct en mémoire par les moyens de transfert (12).

6. Dispositif selon l'une quelconque des revendications précédentes, dans lequel le nombre d'échantillons insérés ou supprimés dans la file d'attente par les moyens de régulation (10) au cours du transfert de chaque bloc est de 0 ou 1.

7. Dispositif selon l'une quelconque des revendications précédentes, dans lequel l'en-tête de chaque paquet comporte un numéro de séquence du paquet, et dans lequel les moyens de traitement de paquets (8) sont agencés pour analyser les numéros de séquence contenus dans les paquets reçus afin d'ordonnancer les échantillons de la file d'attente sur la base des numéros de séquence, d'insérer des échantillons de substitution dans la file d'attente pour compenser des paquets non reçus en temps utile et de supprimer des paquets reçus tardivement.

## Claims

1. Device for reception of packets, each of which contains information encoding a real-time signal and a header that includes information date-stamping the packet in relation to a clock for sampling the signal, comprising:
- sample storage means (11);
- packet processing means (8) for recording, in the storage means, a queue of signal samples obtained from the packets which are received asynchronously, the samples in the queue being ordered according to the date-stamping information contained in the packets;
- sample transfer means (12) for forming, at the rate of a local clock, a synchronous stream of samples (Φ') representing the real-time signal, which are successively transferred as blocks from the waiting queue,
and **characterised by**:
- regulating means (10) for controlling the transfer means so as to limit the variations of the number of samples in the waiting queue, by inserting or removing samples in the synchronous stream with respect to those read from the queue, as a function of the evolution of the number of samples which are recorded in the storage means by the packet processing means during periods which are defined relative to the said local clock, the number of samples inserted or removed in the waiting queue during the transfer of each block being substantially less than the number of samples obtained from a packet.

2. Device according to Claim 1, in which the regulating means comprise a processor (10), and in which the packet processing means (8) and the transfer means (12) are designed to access the storage means (11) in direct memory-access mode under the control of the said processor.

3. Device according to Claim 2, in which the said periods which are defined relative to the said local clock correspond to a specific number of sample blocks in the storage means (11) being read by the transfer means (12) in direct memory-access mode under the control of the said processor (10).

4. Device according to Claim 2 or 3, in which the insertion or removal of samples in the queue by the processor (10) involves an addressed shift at the start of reading in direct memory-access mode by the transfer means (12) .

5. Device according to Claim 2 or 3, in which the insertion or removal of samples in the queue by the processor (10) involves regulating the number of samples which are read in direct memory-access mode by the transfer means (12).

6. Device according to any one of the preceding claims, in which the number of samples which are inserted or removed in the queue by the regulating means (10) during the transfer of each block is 0 or 1.

7. Device according to any one of the preceding claims, in which the header of each packet includes a sequence number of the packet, and in which the packet processing means (8) are designed to analyse the sequence numbers which are contained in the received packets so as to order the samples in the queue on the basis of the sequence numbers, insert substitute samples into the queue so as to compensate for packets which are not received in time to be used, and remove packets which are received late.

## Patentansprüche

1. Vorrichtung zum Empfang von Paketen, die jeweils Informationen zur Codierung eines Signals in Echtzeit und einen Kopf enthalten, der eine Information zur Datierung des Pakets bezüglich eines Taktgebers zur Signalabtastung enthält, umfassend:
- Mittel zur Speicherung von Abtastwerten (11);
- Mittel zur Verarbeitung von Paketen (8) für die Speicherung einer Warteschleife von Signalabtastwerten, die von asynchron empfangenen Paketen erhalten werden, in den Speichermitteln, wobei die Abtastwerte der Warteschleife entsprechend den in den Paketen enthaltenen Datierungsinformationen angeordnet werden;
- Mittel (12) zur Übertragung der Abtastwerte für die Bildung eines synchronen Abtastwertstromes (Φ'), der das Signal in Echtzeit darstellt, im Rhythmus eines lokalen Taktgebers, wobei die Abtastwerte aufeinanderfolgend durch Blöcke aus der Warteschleife übertragen werden,
und **gekennzeichnet durch**:
- Regelungsmittel (10) zur Steuerung/Regelung der Übertragungsmittel, um die Änderungen der Anzahl von Abtastwerten der Warteschleife zu begrenzen, indem Abtastwerte bezüglich der in der Warteschleife gelesenen Abtastwerte in den synchronen Strom eingefügt oder entfernt werden, in Abhängigkeit von der Entwicklung der während festgelegten Zeitintervallen bezüglich des lokalen Taktgebers von den Mitteln zur Verarbeitung der Pakete in den Speichermitteln gespeicherten Anzahl von Abtastwerten, wobei die Anzahl der während der Übertragung jedes Blocks in die Warteschleife eingefügten oder entfernten Abtastwerte wesentlich geringer als die Anzahl der Abtastwerte ist, die aus einem Paket erhalten werden.

2. Vorrichtung nach Anspruch 1, bei der die Regelungsmittel einen Prozessor (10) umfassen, und bei der die Mittel zur Verarbeitung von Paketen (8) und die Übertragungsmittel (12) so aufgebaut sind, dass sie im Modus des direkten Speicherzugriffs, kontrolliert vom Prozessor, Zugriff auf die Speichermittel (11) haben.

3. Vorrichtung nach Anspruch 2, bei der die bezüglich des lokalen Taktgebers festgelegten Zeitintervalle dem Lesen einer bestimmten Anzahl von Blöcken mit Abtastwerten in den Speichermitteln (11) durch die Übertragungsmittel (12) im Modus des direkten Speicherzugriffs kontrolliert vom Prozessor (10) entspricht.

4. Vorrichtung nach Anspruch 2 oder 3, bei der das Einfügen oder das Entfernen von Abtastwerten durch den Prozessor (10) in der Warteschleife ein Versetzen der Adresse umfasst, an der das Lesen im Modus des direkten Speicherzugriffs durch die Übertragungsmittel (12) beginnt.

5. Vorrichtung nach Anspruch 2 oder 3, bei der das Einfügen oder das Entfernen von Abtastwerten durch den Prozessor (10) in der Warteschleife eine Regelung der im Modus des direkten Speicherzugriffs von den Übertragungsmitteln (12) gelesenen Anzahl von Abtastwerten umfasst.

6. Vorrichtung nach einem der vorhergehenden Ansprüche, bei der die Anzahl der von den Regelungsmitteln (10) während der Übertragung jedes Blocks in die Warteschleife eingefügten oder entfernten Abtastwerte 0 oder 1 ist.

7. Vorrichtung nach einem der vorhergehenden Ansprüche, bei der der Kopf jedes Pakets eine Sequenznummer des Pakets umfasst, und bei der die Mittel zur Verarbeitung von Paketen (8) so aufgebaut sind, dass sie die Sequenznummern analysieren, die in den Paketen enthalten sind, welche empfangen werden, um die Abtastwerte der Warteschleife auf Basis der Sequenznummern anzuordnen, und um Ersatzabtastwerte in die Warteschleife einzufügen, um Pakete zu kompensieren, die nicht rechtzeitig empfangen werden, und um Pakete zu entfernen, die verspätet empfangen werden.
